# EUROPEAN PATENT APPLICATION

(11) **EP 2 871 607 A1**
(43) Date of publication of application: **13.05.2015**
(21) Application number: 13740367.1
(22) Date of filing: 29.05.2013
(51) Int. Cl.: G06Q 30/02, G06Q 50/00

(54) **SYSTEM AND METHOD FOR CALCULATIG DYNAMIC PRICES**

(30) Priority: 29.05.2012 PT 2012106344
(71) Applicant: Ubiprism, LDA., 3810-193 Aveiro (PT)
(72) Inventor: CAMPOS DE FIGUEIREDO FACEIRA, Luís Filipe, P-3800 Aveiro (PT); DOS SANTOS GONÇALVES, Rui Miguel, P-3800-211 Aveiro (PT)
(74) Representative: Ferreira, Maria Silvina
(86) International application number: PCT/IB2013/054444
(87) International publication number: WO 2013/179242

(57) **Abstract**

System to manage and provide dynamic personalized prices as a result of a promotion of the product by the customer on the internet, in particular through a mobile device.

The present invention has application in the intersection between physical commerce and the online identity of its customers using their mobile phones and its data connections as a means for identification and communication.

This invention consists in a computer system that allows customers of physical stores, using their mobile phones, to promote the store and its products and be rewarded with special deals with optimized value and customized for that particular customer, taking into account, among other things, the degree of his online social influence.

Accordingly, the present invention is useful for allowing algorithmically optimization of the prices of their products, and for letting the store know automatically and in real time the identity of the customers present in their stores as well as the products they are interested.

## Description

### Technical Field of The Invention

The current invention relates to computer systems and methods, particularly to processing and transporting data structures customized for supplying and controlling prices with value / percentage personalized as a consequence of a promotion of the product by the customer on the Internet, in particular through a mobile device.

### PREVIOUS RELATED INVENTIONS

Shopkick - http://www.shopkick.com - Shopkick is an application that can be installed in mobile phones which gives its users some rewards associated with physical interaction in the shop. It offers points (which can be redeemed into promotions) in all stores (whether or not they are Shopkick partners) to customers for scanning the barcodes of products, all in an environment that resembles a game. If the store is a partner of the company, it might install devices that automatically detect the presence of customers, allowing them to also send promotional messages complementary to the "game". The technique they used for detecting customers presence using ultrasounds is discussed in the following patent document.

WO2011014292A1 (Method and system for presence detection) the approach is not focused on promoting the store and its products using the customer's social networks. It is also not mentioned that they use any type of customization of the value / percentage of the rewards and / or discounts that are given to the customers. They are also quite different compared to the current invention because they have a very inconvenient issue: that all interaction occurs on the assumption that the customer already has the specific Shopkick application installed on its phone - shops only take advantage of this technology if the client has prior knowledge of the application and is already a user of it, which is completely unnecessary under the approach of the current invention.

ShopSocially and Curebit - http://www.shopsocially.com / http://www.curebit.com These two companies have developed technology that takes advantage of customers promoting the store in their own social networks, integrated with multiple e-commerce systems. However their solution is only applicable to online commerce and has nothing to do with physical brick & mortar retail or with the use of mobile phones.

Another clear distinction is the fact that the reward is only given to customers after purchasing the product, not taking advantage of the extra emotional incentive to unlock the purchase indecision of a customer that is still just interested in the product. Another value-added of the current invention is the fact that it also records purchase intentions and not just purchases effectively made. US2011029364A1 (Method and system for presentation and redemption of personalized discounts) - This patent document covers the issues of detecting the location of a client (through an application installed on its phone) and sending him offers taking into account the customer's demographics filtering so that it presents the offers more suitable to their profile. It addresses the multiple operations that the client can establish from an initial promotional message, including product promotion on social networks and consequent reward. Although there is no explicit reference to this prerequisite, it is obvious that the invention described herein involves the previous adhesion of the client to the promotion system, which the current invention does not require. They also do not take advantage of the use of two-dimensional bar codes for the customer to have the initiative of showing its interest in a particular product.

US2011028160A1 (Method and system for location-triggered rewards) - this patent document addresses one of the components of the current invention, in what concerns to the process of detecting the customer's location so that promotional messages may be sent to him.

As in previous cases, it presupposes a prior download of an application by the customers to join the system, even though that isn't explicitly stated on the patent. It only addresses the process of detecting a client using its mobile phone and send him promotions, an extremely vague concept that is used by most of the state of the art here presented. The current invention does not have its strongest focus on sending deals to the customer, but on having him take the initiative to request a specific customized deal.

US2011029359A1 (Method and system for detecting presence using a wifi network detector probe) - Discusses one of the possible client detection techniques that the current invention may or not use to accomplish that partial goal. Once again, this solution requires a prior commitment of the customer to the system.

US2011029362A1 (Method and system for adaptive offer determination) - It presents dynamic calculation techniques for determining the optimal value of offer/discount that maximizes the conversion of that offer while minimizing the value of the discount. This involves a statistical analysis of historical activations of the discounts over a particular product. It says that the activity may be a result of scanning a bar code and of detecting the customer location. It does not address, however, the determination of how relevant the social status of the user is, if its opinion is or is not relevant to the community, which is one of the key aspects of the present invention.

### General description of the invention

The present invention has application in the areas of the intersection between physical commerce and the online identity of its customers, using mobile phones and their data connections as a way and means for identification and communication with the store.

This invention is a computer system that allows customers of physical stores to promote the store and its products and be rewarded with personalized offers with value optimized for that particular customer, taking into account, among other things, the degree of his influence online.

Accordingly, the present invention is useful because it allows stores to algorithmically optimize the prices of their products, and to automatically know in real time the identity of the customers present in their stores as well as the products they are interested in.

This invention takes advantage of the fact that it is already quite high the amount of consumers who have permanent access to the Internet on their phones, and almost all of these are users of social networks.

Many of these consumers assume a position of high exposure of their personal lifes in social networks and share products that they have interest in acquiring.

This trend of being at ease with sharing this type of information is a huge opportunity for stores to promote this behavior, rewarding them for this highly effective marketing with personalized offers and discounts. Typically this type of behavior is only promoted to consumers who are in their homes using e-commerce sites, but not in traditional physical commerce.

The present invention allows a physical store of any size to streamline and promote such behavior, providing a tool for any consumer with a mobile phone connected to the Internet to easily advertise to "its world" his interest in a certain product.

Moreover, the system allows to take advantage of this expression of interest in the product to generate an additional incentive that might provide to the consumer an emotional boost that breaks his possible indecision: a personalized offer/discount.

It also is very difficult to calculate the value that an offer/discount must have that his high enough for him to be compelled to go through with the deal, but still is as low as possible in order to maximize the store's profit.

The current invention is implemented in a software system with a client-server architecture.

The server manages the process of authentication and authorization of the access to the customer's data in its social networks using the OAuth protocol.

The system automatically generates identifiers and bar codes that enable customers to interact with an item to obtain custom prices, being automatically embedded into that codes, the detection of the customer location.

As will be described in greater detail in isolated sub-processes, the system determines algorithmically the optimized price to present to a client based on information obtained communicating with the servers of the customer's social network.

The system implements multiple detection processes and presents personalized prices to the customer through its mobile phone.

The server performs interpolation between the different products to promote and the physical spaces where they will be placed, assigning each possible combination an alphanumeric code that internally identifies the pair product/place.

For each generated code, the system produces a web page, for example in a dynamic way parameterized by such code, that presents the promotion, and it produces a bar code, for example a bi-dimension one of the Quick-Response type, that may be placed alongside a product, in each respective place.

Through the authentication process eg. OAuth, the customer authorizes, by entering the credentials in its own mobile phone that identify him, that a central computer of the store communicates with that person's social network(s). The server therefore communicates with the APIs - Application Programming Interfaces of the social network(s) of the individual, through the Internet, safely obtaining various social properties of the person, such as his name, his photograph, demographics and social graph.

With this information, the computer system calculates, for each vector of analysis, the expected degree of sensitivity of the client to a promotional price to be presented. This calculation is obtained by analyzing, for each of the individual properties and for each of the previously known properties of the product, the history of successful conversion of previous offers and their values. The computer system calculates a weighted average of the different price sensitivities calculated for each of the multiple properties, determining therefore a relative scoring, with value between 0 and 1, of the minimum value expected for the discount to present at that time so that it is attractive enough for the client to consider the purchase.

This ideal price sensitivity is then applied to the average discount pre-configured for that product, applying a transposition to the value so that it reflects the standard deviation targeted by the store for the discounts on that particular product.

To allow this final calculation to occur very rapidly, the invention utilizes servers with high computing capacity in a cloud-computing environment and proceeds to calculate in anticipation values of relative sensitivity to price for each expected analysis vector.

Most related inventions involve two assumptions that the current invention overcomes completely:
- The need for the customer to have previous knowledge and commitment to the promotions management system
- The need for the customer to install a specific application in order to get the promotions

By taking advantage of bar codes (e.g. bi-dimensional quick response codes) as a starting point for the interaction between customers with the store, the current invention does not require any prior knowledge of the system by the customer.

Another advantage is the use of the social relevance of a client to help determine the offer that shall be presented to that client. For the socially influential customers, such as celebrities, the store is usually interested in offering an higher discount, particularly because this discount is conditioned by the advertising of the product, by the customer, on his social network(s).

Additionally, by associating the customer with their online identity in social networks, the usage of all the available information in those systems about this client (from simple demographic information to the composition of your group of friends, personal tastes) is possible, allowing a better calculation of the optimal discount.

Another feature of the current invention is that it shows offers/promotions to the customer for products that he has already demonstrated interest in buying.

### DESCRIPTION OF THE FIGURES

For an easier understanding of the invention, the following figures were attached, representing a preferred implementation of the current invention, but without the purpose of limiting the scope of the current invention.
**Figure 1:** Schematic representation of the overall architecture of the system in a particular embodiment.
**Figure 2:** Schematic representation of the process flow of the prior preparation of products / promotions.
**Figure 3:** Schematic representation of the process of creating and activating a custom price by the customer, from the perspective of the system.
**Figure 4:** Schematic flow of the overall system operation.
**Figure 5:** Schematic representation of the process of calculating dynamically the optimized value.
**figure 6:** Schematic representation of the flow of the process that calculates the scoring for each vector of analysis (purchasing power, susceptibility to discounts, interest in the product, etc.).
**Figure 7:** Schematic representation of the overall architecture of the system in a particular embodiment.
**Figure 8:** Schematic representation of the overall architecture of the system in a particular embodiment.

### Detailed Description of the Invention

Various embodiments of the invention will be described next. The invention is of course not in any way limited to the embodiments here described and a person of ordinary skill in this subject can predict many possibilities to modifications of the invention without departing from the invention as defined in the appended claims.

Procedure 01 - Preparation of a promotion:
A. The manager of the store chain defines the product to promote, introducing in the computer system, for example, its description and photographs (2010).
B. The store configures a promotion, defining its characteristics in the computer system (2020), in particular the range intended for the discounts on the product, which can be, among others:
   a. Fixed unvariable value (2021)
   b. Limited value by minimum and maximum (2022)
   c. Median value and standard deviation (2023)
C. The computer system generates a unique identifier for the combination of the product and for each of the stores where it is intended for the promotion to be made available (2030), generating a unique address and respective two-dimensional barcode that provides access to the special offer (2040).
D. The manager prints the labels generated by our system and places them next to the product in the store (2050) .

### Technical Description of Process 01

A. The manager, using its own computer and a web browser installed on it, accesses the configuration page on the central server of the invention, through the Internet.
   On this page, the manager inserts the product characteristics to be displayed during the process of differentiating prices (image, title, technical specifications, bar code identifier, etc.), and this information is stored into a database (2010). Besides the picture and description of the product, as an example, the manager can insert in the application the values that define the variability of prices that are admissible. Among the different fields of the multiple characteristics that influences the algorithm of optimal price (described later), we highlight the following:
   a. Cost of the product to the merchant;
   b. Base sale price of the product;
   c. Maximum admissible value of discount (optional);
   d. Minimum admissible value of discount (optional).
   This process is repeated for all products for which it is intended to perform price optimization.
B. The computer system, after the insertion of the characteristics of the product, calculates all the possible combinations of products and different stores where they are sold. For each possible combination, the application creates an item in the database that represents the pair Product/Place.
   So that this item can be referenced in the multiple processes which will be described later, the application determines a unique identifier code for each item. Since the unique identifier must not be easily guessed for security reasons but it also must be easily written in a small and sometimes virtual keyboard of a mobile phone, it is not possible to use the classic numeric incremental codes technique. Instead, and for example, the server determines a code by generating a random sequence of characters, composed of five alphabetic characters in lowercase, validating that the code hasn't been used yet in the database, repeating the process of generating new values, if necessary. For each pair, the application creates a website tailored to be displayed on mobile devices, by applying a predefined template, whose address contains the letter code identifier for an easy manual entry (2030) .
   The application produces an image of a bar code, in particular in two-dimensional format, more particularly in the form of QR (Quick Response Code) for each address of each web page generated for each pair product/place, which is stored for later printing or to include in promotional assets in the store (2040) .
C. Through a menu on the application, the manager requests that special labels for activating the discount are generated. By applying the properties of the products selected by the manager over a labeling template previously designed and stored in the application, the computer system allows the printing of all the different labels to be placed in a specific store, which when placed next to the product and because they contain dynamic barcodes, enable the buyers to trigger the process of getting a customized price (2050).

Process 02 - Activation of a promotion, from the customer's perspective and using his mobile phone:
A. The client realizes the possibility of obtaining a discount on a product (typically by viewing the label next to the product.)
B. The user initiates the process of activating the promotion (3010), in one of the following ways:
   a. Using a generic QR code reader, available for most mobile operating systems, the client scans the code on the label
   b. The customer manually inserts the Internet address that uniquely identifies the promotion and starts its activation in their mobile phone
   c. The client identifies the promotion that he wants using a previously installed application
C. using the phone's Internet connection, the client accesses a web page where besides a more detailed description of the product (3020) he can insert a promotional phrase (3030) to be shared through his social network(s).
D. If the client has not already done this operation before, he is requested permission (3040) by the social network(s) to allow publishing the promotional messages. This permission is obtained through a process of authentication and authorization eg. OAuth through which the promotions management server gets access tokens to interact with the APIs of the client's social network(s).
E. The system automatically publishes in their social network the message inserted by the customer (3050), in his name, promoting the product's photo and promotional link. Using the access tokens obtained in the previous step, the promotions management server communicates with the servers of the social network through the Internet, requesting the publishing of the message on behalf of the customer, with the phrase inserted by him along with the photo and the promotional link previously configured on the store's server by the store manager.
F. The system dynamically calculates the optimal value of discount to be given to the customer according to several factors such as his degree of online influence (3060).
G. The system presents to the customer the promotional offer that he is entitled to, along with a bar code generated for this discount and identification of their friends who have enjoyed the offers for the same product. This value is displayed on the mobile client, as a consequence of his request, through his mobile phone, to get a discount interacting with the promotion application.
H. The customer presents its discount coupon to the check-out operator of the store (3070) which can optionally scan the generated bar code (3080).

### Technical Description of Process 02

A. The client, while moving inside the store, realizes the possibility of getting a discount on a product. This occurs because he views the label produced by the application as described in Process 01, or by other methods of presenting special prices there defined.
B. The user initiates the activation of the promotion (3010), using the following techniques implemented by the system:
   a. Scan the barcode Using his mobile phone, the customer uses an application for reading bar codes to decode the contents of the two-dimensional bar code. This barcode produced by the computer system in the previously described Process 01, contains the pre-coded Internet address that allows the access to the page where the personalized price of a particular product and a particular store can be obtained.
      When the barcode decoder application detects that an Internet address is present, it starts the Internet web browser of the smartphone in that address.
   b. Manual Introduction of Web Address The client enters the address that accompanies the barcode, in its phone's Internet browsing application.
      This web address was previously generated by the computer system in Process 01, in such a way that is extremely short and contains only alphabetic characters, thereby allowing that the introduction of this information can be performed without great effort on a mobile device. The address triggers the interaction between the client and the computer system and contains embedded the identification code of the pair product / location.
   c. Selection in mobile application Using location detection techniques that will be described in subsequent cases, a previously installed application on the client's mobile phone displays on its screen several products that can be purchased at personalized prices in the current store. The customer clicks on a product presented. The application detects this event, and uses the web address that is associated with that item and launches the Internet browser of the client's mobile phone on that address, where the process of personal interaction takes place.
C. The Internet browser of the customer's mobile phone accesses the website, whose address contains embedded the unique identification of the promotion. The server interprets the request of the client and extracts from the requested address the part that contains the code that identifies the promotion. With this code, the system queries its database to determine which to which product and which store it is associated with, data properties that were set at the time of the creation of the identifier code. The server instantly produces a website, specially prepared for being viewed on mobile devices, by applying the information that describes the product and the promotion and that was previously set on the database, to a template of a page to present the promotion (3020). The generated page is downloaded by the client's Internet browser, and a simple form is there presented that, as an example, allows the customer to insert a promotional phrase for him to characterize the product.
   The customer enters a phrase that he wants to share with his friends to help promote the product and requests his personalized price, by clicking in a button on the page (3030).
D. The promotional phrase inserted by the customer is stored on the server's temporary storage system, so it can start the authentication safely without any chance of data loss during that process. The system verifies if already has a token for both authentication and authorization for that same user and for the current session, due to recent interactions carried out by him, on the same phone. If a previously provided authorization token does not exist, an authentication process according to the OAuth authentication methodology is started between the customer's smartphone, the server of the current invention and each one of the social networks to which the user is connected. According to the proposed methodology, a customer authentication page of the social network is presented to the customer, only if he is not already logged on his smartphone, due to a previous usage. (3040). After being known the identity of the user, it is presented a page from the social network on the customer's smartphone, requesting his authorization for the invention to interact with the social network on the customer's behalf. As soon as the customer explicitly authorizes the request which was made, by clicking a specific button with that purpose, he is redirected to a page where the custom price is presented. By combining the OAuth process with a direct communication between the invention's server and the social network, a authorization token is obtained by the server allowing it to interact with the social network in future moments, as if it were the user. Along with the identification code of the customer in the social network, the token is stored in the server's database.
E. The system combines the message that the customer had previously entered with information that characterizes the product, such as its name, address and photograph. This message is published on the social network, communicating with its server through its Application Programming Interface (API). For this purpose, it uses the authentication token obtained in the previous step, making the publication appear to be originated by the client, in his personal profile in his social network (3050).
F. The application determines, from preset information and from information obtained by communicating with the client's social networks, an optimal price to be presented to the client, in accordance with the steps outlined in Process 04 (3060).
G. The server records in its database the promotional price generated at that moment, along with all its features, such as the calculated intermediate scores, the store, the product, and at that time is created a unique incremental number to identify the event unambiguously.
   The application generates a one-dimensional barcode for the code previously set by the manager that identifies the discount to be applied, value obtained from the database server. By querying the database of all the previously presented personalized prices for the same product, the application determines by comparing the client's social network identifier, if any of the persons with which the current client has a relationship (information obtained in previous step by communication with the social network's API), has already requested discount for the same product. For each situation where this has happened, the server communicates back to the systems of social network to obtain the photograph and name of that related person. The server presents in the client's Internet browser a new page, in which the properties of the discount, the product and the related persons that used the discount, are applied into a predefined template page, prepared to be viewed on mobile devices, and also presents the barcode that allows the validation of the discount.
H. The client presents his mobile device to the operator of the store in order to claim his right to obtain a promotional value on the product, at the time of payment (3070) .
   The store operator optionally uses the barcode reader of his POS - Point Of Sale application, to read the bar code presented on the client's mobile phone, and that identifies the code of the promotion, streamlining the process of data input in the check-out.
   The operator can also access on his computer to a predefined address of the invention's web server to validate the promotions used in his store. In this situation, the server queries its database to determine all the personalized prices that were generated in that store, in the current day. For each discount that has not yet been validated, and by applying that data on a webpage template, the system presents the characteristics that are related to the discount such as its value, associated product, name and photograph of the client. It is also displayed a button which allows the operator to record the redeeming of the discount, at which time the application registers on the database that that specific coupon should not be used again (3080).

Process 03 - Activation of a promotion, in the store's perspective:
A. The customer activates a discount (previous process, steps A to E).
B. Using the OAuth authentication tokens previously granted, as described in the previous process (4010), by the customer to the computer system, it communicates directly with the APIs of the customer's social networks instantly getting (4020) a detailed description of that person (name, photo and other information provided by that customer's social network). Since the page that the customer as accessed contains a code that identifies the pair product / store, the system detects by examination of its database and instantly presents which product for which the customer has expressed interest (4030) in that store (and only that store) at that moment (offers expire after some time.)
C. The store may optionally address the customer to encourage him to buy the addressed product, since the employee can recognize the customer inside the store after viewing his identification and photograph in the computer system (4040).
D. If the customer actually buys the product, the operator can optionally scan the barcode presented on the customer's mobile phone, awarding him the promotional discount that can also be validated in the computer system (4050).

### Technical Description of Process 03

A. The client activates a discount according to all the technical steps involved and described in the previous process, steps A to E.
B. In the step F described in the previous process, the system uses the OAuth authentication tokens to communicate with the customer's social networks to obtain a detailed description of the customer. In addition to the fact that this information permits, as described in the previous process, to calculate an optimal value of the discount that should be given to that customer, it also enables simultaneously that the information is presented to the store's employees (4010 and 4020). By analysing the code product/location associated with the page accessed by the customer (4030), along with the name and photograph of the customer, the computer system creates a new page, accessible by the employees of a particular store, which displays the list of all clients, their photographs and products in which they've expressed interest (4040).
C. The store employee uses one of the store's computers with Internet access to navigate Internet by accessing the page from the server whose address contains code identifier Store. System detects code identifier Store the address entered by the seller and applies the data-base-data of the newly activated in this store promotions on page template prepared previously. By detecting the name and picture of the customer and the product in which it is interested, the seller can approach the customer to strengthen the sale process.
D. If the customer chooses to use the discount custom, the seller can activate the discount as described in step H Process 02 (4050).

Process 04 - Dynamic calculation of custom price
A. The server communicates with the social network via its API using credentials (token) previously obtained (5010) which allow the application to interact with the customer's data. Through this method, it instantly gains an high set of information contained in the profile of the person (5020), such as age, gender, occupation, marital status, education level, etc..
B. Based on each obtained property, the client can be characterized with a score between 0 and 1 based on probabilities for each of the following areas of analysis that will assist in determining the custom price (5030):
   a. Purchasing Power For each property extracted (6010) a score of likely purchasing power of the customer is determined, by consulting tables of probability of purchasing power (6020). These tables are preloaded with a score for each value or range of values for each of the properties analyzed, having been pre-determined based on statistical analysis of average purchase power of people with the same characteristics. It is then obtained a total score of likely purchasing power for that customer (6030).
   b. General susceptibility to discounts The same operation is applied on different customer information to determine the score of how likely it is that the customer is susceptible to the psychological effect caused by a discount. Beyond the score determination from a preloaded table (6020) for each extracted property (6010), the system queries a database containing the history of that customer's interaction with the application, assigning overall an increasing score of susceptibility (6030) to discounts for each situation in which the customer has activated a personalized discount, and reducing the overall score of susceptibility (6030) to discounts for each situation in which it was presented a discount to that customer and it was not used.
   c. Interest in the product Preloaded tables (6020) identify the average interest in a particular product category, based on statistical information. By analyzing each feature extracted from the user profile (6010), it is determined the similarly to the two points described above, a score of probable interest of the client (6030) in a particular product for which he is getting a custom price. Complementing the analysis based on their demographic information, the system gets, through the social network API and the authorization token, the list of interests of the client, and checks if the product brand or brands of the product for which a custom price was requested is in that list or if other products of the same category are present. If it occurs, it is recorded by the system as additional score for the probability of customer to be interested in the product. The system also analyzes the sentence that the client entered to promote the product, looking for predefined words associated with positive feelings (eg. "taste", "want"), giving these positive score of additional probability of interest in the product. Similarly, the system searches the text entered for excerpts predefined as characterizing uncertainty (eg. "since", "up", "do not know") giving a negative score in this type of situations.
   d. Social influence Once the Customer promotes the product that wishes to purchase and the store where he is making the purchase, the store gets a benefit proportional to the client's degree of influence. So the store can admit an additional discount to customers who have a high degree of social influence.
      To determine the score of probable degree of social influence, the system queries the social network API's by using the authorization token that identifies the client, obtaining the number of relationships he has. Additionally, the system interacts with another provider (5040), also through an API, and the customer identification in the social network, to get an independent score of influence online that same customer. The application combines these two values to determine the degree of online influence of the client (6040).
C. The first three factors affect the overall score inversely wherein the customer susceptibility to price, and therefore will have a negative weight in the determination of the rebate. The last factor influences the profitability of a sale, so it has a positive weight in the discount determination. The system queries the database to get the concrete weights that have been predefined for each of these factors in the product category that it belongs, thus calculating a weighted average of the four factors, to determine the final score between 0 and 1 (6040).
D. The application determines the range of values of possible discounts for the product, the maximum being equal to the explicitly value defined in the database by the manager or the profit margin of the product and the minimal value equal to the value explicitly set by the manager or equal to 0 if not set explicitly.

The application multiplies the score by the permissible range of discounts, to provide the customer with an optimized discount (5050).

There is another process that may or may not be implemented separately that takes advantage of the association of the client to its identity in his social networks.

Process 05 - Displaying personalized promotional offers after detecting the user's presence through the usage of mobile application
A. The client installs the application on his mobile phone
B. The customer authorizes the application to connect with his online social identity
C. When the customer enters the store, the application detects his presence through one of the following techniques:
   a. The application detects the presence of a wireless network that identifies the store
   b. The application detects a relay cellular network that identifies the store
   c. The application detects an ultrasonic sound that identifies the store
   d. The client passes his mobile phone by a proximity sensor chip that identifies the store
D. The application running on the client's mobile phone detects the store and:
   a. Displays a notification in the client's mobile phone screen (also associated with a notification sound and vibration) that contains a graphical interface through which the client is asked if he wants to announce his presence (using the Internet connection of the client or the wireless network of the store that was detected) and if he wants to receive information of offers and discounts addressed to him or
   b. According to the client's prior authorization, the application itself starts the process of announcing the presence of the user, described in the next section
E. The application installed on the client's mobile phone communicates through its Internet data connection to the server that is the core computing component of this invention, using an API - Application Programming Interface provided by that server, and sends the identifying code of the customer and the store in which the customer is in.
F. The system calculates all the potential discounts to which the client is entitled, calculating the personalized value of each offering according to the previously described process 04, for each of the products and promotions available in the store
G. The personalized offers are presented to the customer, along with friends who took advantage of similar offers, allowing the customer to share each product/offer on his social networks, as described in Process 02.

### Technical Description of Process 05

A. The client uses an application market of his mobile phone's operating system to install the application. Alternatively, the client may scan a two-dimensional barcode QR-Code that contains the Internet address from which the application can be installed from, through the client's own Internet data access.
B. The first time the customer uses the mobile application, it redirects the user to a page where he can authenticate himself before his social network. This occurs through a process of authentication and authorization using the OAuth mechanism, in a very similar way to part of the previously described Process 02 (step D), that occurs through communications between the current invention's management servers and the servers of the social network. The result is presented in the interface of the customer's mobile application. The authorization token is stored on the server, and a randomly generated and unique identifier is created by the server to identify the client, which is sent by the server to the mobile application. This identifier is stored in the phone's memory so that the phone is able to identify itself to the server on subsequent accesses.
   The server, when creating the customer's account, stores information associated to it on its database, information obtained by consulting the API of the social network, such as the name and photograph of the customer. This information is also sent to the mobile application in response to the request for account creation sent from the mobile phone to the API server, so that it can provide that that information may be displayed on its menus and interfaces.
C. During the installation, the application register itself in the operating system of the mobile device to perform, in a transparent and invisible way to the customer, a periodic attempt to locate the device in accordance with the following described techniques:
   a. Daily, the mobile application communicates with the central server's API to obtain an updated database listing the wireless networks of the stores, containing the name of the wireless network and the numeric identifier of the store where these wireless networks are located. This list is stored in the phone memory. With a relatively higher frequency (between 30 seconds and 5 minutes), the mobile application asks the operating system of the device to list the wireless networks currently detected in the customer's device range at that time. It compares each of the wireless networks detected with the listing of the networks that are known to be associated with stores, determining the identifier of the store where the customer is located, if he is in the presence of a network associated with a store. To ensure that the networks are not detected when the client is not in the store, the store can optionally install the related wireless transmitters on the store ceiling in different areas of the store, in particular in the entrance area, equipped with directional antennas that only emit to a specific area of the store.
   b. Daily, the mobile application communicates with the central server's API to obtain an up-to-date database with the list of identifiers of the cellular relays, containing the CellID of each device and the numeric identifier of the store where that device is installed. With a relatively higher frequency (between 30 seconds and 5 minutes), the mobile application asks the operating system of the mobile phone for the identifier of the cellular device that it is connected at that time. If this identifier is in the previously synchronized database, the unique identifier of the store where the customer currently is located is determined. It is required that the cellular network relays are previously installed in the store and that they are not easily detectable outside the store or installed in the store's ceilings with directional antennas only emitting to the area of the store.
   c. Daily, the mobile application communicates with the central server's API a database with a list of unique store identifiers. With a relatively higher frequency (between 30s and 5 min), the mobile application processes the sound obtained through the microphone of the mobile phone, detecting a possible code emitted by ultrasound. If an ultrasound communication is detected, the identifier of the store is decrypted from the sound detected. Previously, ultrasound transmitters are installed inside the stores and arranged in central areas of the store to prevent that the sound is emitted beyond the area of the shop.
   d. Daily, the mobile application communicates with the central server's API to obtain a database of proximity communication tags (RFID), and the identifier of the store where each tag can be found.
      The customer approaches his phone to one of this special tags with the mobile application running. The application reads the identifier tag by communicating directly with the tag through the mobile phone's RFID/NFC and then queries the internal database to determine which unique store identifier is that tag associated with.
D. The mobile application verifies, by analyzing the settings stored in the phone's memory if the client has previously authorized the automatic announcement of the customer's presence at the store. If the client has never authorized this process, the application optionally emits a sound and presents a graphical user interface requesting the user to confirm that he authorizes to announce his presence to the system and to the store, along with the possibility to automatically concede such an authorization in all future similar situations of presence detection.
E. Given the unique identifier of the store, the mobile application uses the phone's Internet data connection to communicate with the central server's API, sending the identifier of the client account stored in the phone's memory and the store identifier detected.
F. The central server queries its database to determine the set of promotions with custom pricing that are available at that time in that store. For each one of the existing promotions in the store, the server determines, in accordance with the steps outlined in Process 04, the custom price for each product.
G. The server sends to the mobile application, in response to requests to its API, the list of products, promotional prices and identifiers for each custom price. For each custom price it is also sent the number of other people with whom the client has a social relationship that have previously used a similar promotion, as determined in Process 04. The mobile application presents this information in a list in a graphical interface, which has identical features as the web page to present a discount to a store employee, as described in Process 02.

Process 06 - Presentation of promotional offers after detecting the user presence only using the cellular network
A. The client performs login into the service and identifies, among other elements his phone number
B. The customer authorizes the service to connect itself with his online social identity
C. When the customer enters in the store, a relay cellular network detects the presence of the customer through his unique mobile number
D. According to the preferences previously determined by the customer, the system:
   a. Questions the customer by SMS if he wants to announce his presence (using an Internet link or reply by SMS) to activate the service or
   b. Under previous authorization from the customer, the system automatically triggers the (internal) visibility of customer presence in the store
E. The system determines all potential discounts to which the client is entitled, calculating the customized value of offering as described in Process 04, for each of the products and promotions available in the store
F. Personal offers for which the customer is entitled are presented by SMS
G. The client initiates a process of sharing similar to that described in Process 02, with the following features:
   a. Starts the process through the link in the SMS sent to his mobile phone
   b. Replies through SMS with promotion code and phrase to be shared, operation that takes place without requiring the client to have a data connection on his phone

### Technical Description of the Process 06

A. The mobile phone number of the client is loaded into the database by another system or manually by a manager who obtained this information
B. Is sent an SMS message to the customer's mobile phone with a link to the page that allows the access to the social network. This page contains customer identification, and initializes an authorization process according to the OAuth methodology, identical to what was described in Process 02. This process can be performed in the same way in the mobile phone of the client, if it has Internet access, or any other computer that the customer uses, especially when he is still at home, and the technical process is identical, no matter the location or device from which it starts.
C. It is installed a cellular network retransmitter in the store, placed on the ceiling of the store with directional antennas that allow to restrict the signal output to the store area. When the retransmitter initiates communication with a mobile phone, it communicates this fact to the central server through its API, along with a unique identifier of the retransmitter itself. The central server uses a database to verify if the detected phone number belongs to a customer adherent to the system, and if that is the situation, it detects which store is associated with the retransmitter from its unique identifier.
D. According to the preferences previously defined by the customer in the authorization process, the server:
   a. Sends an SMS to the customer requesting that he authorizes that his location detection is used. A random and temporary authorization code is created, for which the server creates a page and provides its address in the sent SMS. If the client enters this address into his phone, the server extracts the code and considers the authorization successfully completed. Alternatively the client can respond to the SMS using any text. In this case, when the system receive an SMS, it sends the recorded information to the central server via API, which determines the client from the number from which the text message is sent and therefore considers the latest location detected, which can then be made visible to the store.
   b. If it was already authorized that this procedure occurs automatically, the central server instantly logs into its database in which store was the customer detected.
E. For each possible promotional value for the store where the customer is, the server determines the optimal promotional value according to the steps described in Process 04.
F. The server sends an SMS text message to the mobile number of the detected customer, presenting products and custom pricing that may be used by the client.
G. The client starts a process of sharing a phrase similar to that described in Process 02, with the following particulars:
   a. The server generates a random code that contains the identification of the created custom promotion, generating a link to a page similar to the phrase sharing page of Process 02, wherein the custom value has been previously calculated. Similarly to what was explained in that process, the promotion's barcode identifier is displayed in the Internet browser of the client's mobile, which can be presented to the cashier.
   b. The user replies through a text message the identifier code that was sent to him and the phrase that he wants to share. The text message processing system communicates with the central server's API providing to it the received text and the mobile number. The server checks in its database if the phone number from which the message came matches the number of the client and identifies the product to be promoted by the given promotion code identification, posting the message in the social network, in a similar manner to that described in Process 02. After successfully publishing the message on the social network, the number associated with the barcode identifier is sent off by sms to the customer so that he can present it to the cashier.

Process 07 - Presentation of promotional offers using a mixed approach (cellular network + application) for detecting the offers
A. The client registers himself on the service and installs the application on his mobile phone, and identifies, among other elements, his mobile phone number
B. The customer authorizes the application to connect with his online social identity
C. When the customer enters in the store, a relay cellular network transmitter detects the presence of the customer by identifying his mobile phone number
D. The system communicates with the mobile application installed on the customer's mobile phone to trigger the remaining process, identical in the later stages to the previously described Process 05

Technical Description of Process 07
A. The client is registered on the system in the same way as described in step A of Process 06.
B. The client installs the mobile application using the method described in Step B of Process 05 and authorizes access to his social networks through the methods described in Step B of Process 05 or in Step B of Process 06.
C. A relay cellular network transmitter detects the presence of the customer's mobile phone, by association of his mobile number, and communicates this fact to the central server, as described in Process 06.
D. The mobile application suscribes to a "Push Notification" mechanism of the phone's operating system to get messages from the central server asynchronously.
   When the central server detects the presence of the customer's mobile phone, it uses the push-notification system to send a notification message to the mobile application, indicating to the application in which store was the customer detected, which triggers process of interaction described from step D of Process 05.

Process 08 - Client presence detection, from the perspective of a shopkeeper
A. The client presence is detected (and its visibility authorized) in accordance with the processes previously described (05,06 or 07)
B. The shopkeeper visualizes in the system the identity pf the customer that entered in the store, along with some data and his photograph
C. The shopkeeper visualizes innumerable information associated with the customer, such as:
   a. The personalized offers available to him
   b. History of previously used customized offers
   c. Customer profile and demographics
   d. Purchases history in the store
   e. Shopping history of his friends
   f. etc.
D. The shopkeeper optimizes his sales process, by knowing the client's interests, targeted offers that are specifically driven to him, etc..

Technical Description of Process 08
A. The customer's presence is detected (and its visibility authorized) according to one of the processes previously described (05,06 or 07)
B. The server records in database the time of detection of the customer and the store where he was detected. In the customers real-time visualization page, for a store, the server presents, by applying the data in the database of customers who have recently been detected over a predefined template of customer listing where among other information is displayed the name and photography of the client. The employee accesses this page from a computer in the store with Internet access.
C. Based on the customers listing enables the access to a detail page of the client profile, where the server populates all the information it has in the database related to that client, based on the history of the client's interactions with the system or with other store systems.
   If it does not yet have this information, the central server communicates with the API of the sales management system of the store, obtaining additional information to be submitted such as the purchasing history of the customer.
D. With the demographic knowledge of the customer information that is in the store at this moment, the systems provides information to the seller that allows him to optimize the sales process.

Process 09 - Use of the presence and identity of the customer in the store for other purposes
A. The customer's presence is detected (and its announcement authorized) according to one of the processes previously described (05, 06 or 07)
B. The server notifies other systems of the presence of the client, where the store employee is able to identify the customer in the store by its name and / or photograph
C. The remaining systems of the store request information to the central server whenever needed, making available to the store employee an automatic integration of the internal customer records of the store with information in the social networks or in other systems, for different purposes such as:
   a. Automatically fill information, such as the address to which the customer's purchase should be delivered
   b. Integrated payments without the need to take the phone or wallet of the customer's pocket
   c. Analyse customer traffic in the store according to demographic segmentations
   d. Alert the store employees when a VIP client is detected so that they can provide him preferential treatment
   e. Etc.

### Technical Description of Process 09

A. The customer presence is detected (and its announcement authorized) in accordance with other processes previously described (05, 06 or 07)
B. By using the subscription mechanism Pubsubhubhub, or another web subscription mechanism or web-hook-based publish/subscribe protocol, other systems of the store use the central server's API to request to be notified when a presence of a customer is detected. Immediately after the customer is detected, the server publishes a message to all the systems that have subscribed to the notification, containing the name, identification code and the picture of the customer along with the identification code of the detected store.
   Such systems can then provide a list of customers, and the shopkeeper may trigger interaction with the customer information by simply selecting his name or photo.
C. Whenever necessary, the remaining systems use the API server to request additional informations about a specific client, such as:
   a. The sub-system requests to the central server via authenticated call to the API, the delivery address of the customer so that it is automatically populated in the purchase order,
   b. The sub-system validates the presence of the customer in the store and provides their payment data such as bank account numbers or credit card, thus enabling that the payment system processes the transfer without requiring the customer to submit any card or even remove the phone from his pocket,
   c. A sub-system analyses customer traffic through API calls to the central server which provides demographic information about the client detected, and thus allowing statiscal analysis of the customers circulating in the store.
   d. Subsystem requests to the API to calculate the purchasing power of the customer as previously described, allowing to trigger alerts to enable preferential treatment of certain clients.

The system provides an API that gives access to a wide range of information about the client, allowing the implementation of multiple functionalities in other systems that exploit customer detection inside a store.

The invention can be used as part of algorithmic pricing optimization. Currently this process occurs primarily online or in large-scale in the definition of generic offers and promotions, but the space for optimization is substantially higher when performed in a personalized and individual way.

From another perspective, the detection of the items on which a customer is interested in, coinciding with their presence in the store, allows the retailer to strengthen and improve its sales efforts and convert into sales items that the customer is already desiring.

Detecting the presence of the customer and associating that presence with the name and photograph allows the development of multiple optimization processes, allows the store to have a way to authenticate the customer, which allows to optimize the sale process, for example by suggesting him to buy certain items that he often uses (consumables, certain food, brand preferences, etc..) or even making possible a payment by "putting on the tab" without even being necessary for the customer to remove the cell phone or a card from his pocket.

The mechanisms, protocols and systems mentioned above, such as QR-code, OAuth, or others, are mentioned only as examples of preferred embodiments and may well be replaced by other functionally equivalent easily determined by any person of average knowledge in the field. The preferred embodiments described above are obviously combinable between themselves.

## Claims

1. Method to calculate dynamic prices in real-time for a data processing system **characterized by** comprising the steps of:
a. generating individual identifier codes for a plurality of combinations of product or products and the physical spaces where that product or those products will be sold,
b. detecting and identifying the presence of users of the system in each of said physical spaces;
c. receiving, if there is not already stored, for a user whose presence is detected, an authorization to access one or more social networks;
d. storing said authorization;
e. accessing one or more social networks, authorized by that user;
f. calculating one or more price values by calculating the expected value of price sensitivity of that user and / or calculating a parameter corresponding to the degree of influence that the user has in the network or accessed social networks, and through the features defined for the product or products;
g. making available to the user whose presence was detected, a data structure for one or more identifier codes, with the price or prices calculated for each specific combination of product and space via the user's mobile device.

2. Method according to the preceding claim **characterized by** comprising the steps of:
a. storing in advance the characteristics of the promotion defined for each specific identifier code;
b. supply, for each identifier code, a machine-readable representation of said identification code and the corresponding product, with this representation being possible to be placed near the product in the physical space where is marketed;
c. provide such data structure through the web for each specific identifier code having this data structure accessible: through the automatic reading of the representation of that identifier code by a user's mobile device; or through manual entry of such identifier code in a user's mobile device; or through manual input of the identifier code in an application on the mobile device of the user; or through manual entry of said web address in the user's mobile device.

3. Method according to the preceding claim **characterized by** the machine-readable representation of said identifier codes being a bar code, in particular two-dimensional.

4. Method according to the preceding claims **wherein** the data structure, available through the *web* for each specific identifier code, comprises a barcode which contains encoded the identifier code.

5. Method according to the preceding claims wherein the data structure, made available via *web* comprises means for collecting additional data for publication in the social network.

6. Method according to the preceding claims wherein the data structure, made available via web is a web page accessible by the HTTP or HTTPS protocols.

7. Method according to the preceding claims wherein the data structure made available via *web* is a data structure accessible by an application on the user's mobile device.

8. Method according to the preceding claims wherein it involves publishing to the social network data corresponding to the combination of product and the physical spaces of the specific identifier code, and optionally requesting and publishing content retrieved from the user, particularly a text phrase, to post on the social network in conjunction with said data corresponding to the combination of product and physical spaces of the specific identifier code.

9. Method according to the preceding claims **characterized by** involving sending a price validation code to the user to allow the usage of the calculated price.

10. Method according to the preceding claims wherein said price validation code is a bar code, particularly one-dimensional.

11. Method according to the preceding claims **characterized by** involving to register along with the unique identifier: the price validation code sent to the user and the associated calculated price.

12. Method according to the preceding claims **characterized by** making available to the operators of physical spaces where their product is marketed, through said price validation code, the calculated price so that the operator can validate the price request submitted to him by the user.

13. Method according to the preceding claims **characterized by** the calculation of the said price value, through the calculation of the expected degree of price sensitivity on the part of the user and / or the calculation of a parameter corresponding to the degree of influence that the user has on the network or accessed social networks, comprising by the calculation and combination of:
a. a parameter estimator of the purchasing power of the user through previously established statistics applied to the attributes of that user;
b. a parameter estimator of the susceptibility of the user to price through pre-established statistics applied to attributes of said user including its purchase history;
c. a parameter estimator of the interest of the user in the product through applying pre-established statistics to the attributes of said user and said user defined interests in said social network and, in particular, the text phrase of claim 8;
d. a parameter estimator of the online influence of the user by combining the number of relations of said user in said network and a social influence score for said user provided by an external online vendor;
wherein the combination of these factors increases the price for the parameters (a), (b) and (c) and reduces the price for the parameter (d).

14. Method according to the preceding claims comprising:
a. detecting the presence of the user in a physical space where one or more products associated with the previously generated identifier codes are marketed, via the mobile device of the user;
b. calculating for the product or products marketed in that physical space, the respective prices;
c. presenting, through a mobile application or sending messages to the user's mobile device, the product or products marketed in that space, together with their calculated prices.

15. Method according to the preceding claim **characterized by** involving notifying the operator of the physical space where one or more products are marketed and where the user's presence was detected with information corresponding to the user thus identified.

16. Method according to the preceding claim **characterized by** involving communicating with the systems of the operator of the physical space where one or more products are marketed information corresponding to the user thus identified, particularly personal information, payment and / or data obtained from said social network.

17. Method according to the preceding claim **characterized by** storing in a database information of each user thus identified.

18. Method according to the preceding claims **characterized by** involving obtaining a pre-authorization by the user for his mobile device to be identified when located in a physical space where one or more products, corresponding to the unique identifier codes previously generated, are marketed.

19. Method according to the preceding claims **characterized by** involving using a mobile application on the mobile device of the user:
a. to obtain pre-authorization from the user for the application to access one or more social networks through this pre-authorization;
b. to obtain pre-authorization from the user for the application to identify the mobile device of the user when located in the physical space where one or more products, corresponding to the unique identifier codes previously generated, are marketed.

20. Computer program according to any one of the preceding claims, **characterized by** involving the programmed code suitable to perform each of the steps of the method above, when said program is run on a data processing system.

21. Media possible to be machine-readable **characterized by** incorporating the computer program referenced on preceding claim.

22. Data processing system in accordance to preceding claim **characterized by** involving a programmed module that includes the machine-readable media referenced on the previous claim.

23. Data processing system for real-time dynamic pricing **characterized by** involving:
a. module(s) for user management (1150, 1020);
b. module(s) for management and interface with social network (1080);
c. module(s) of product management and dynamic calculation of price (1040, 1050, 1140);
d. module(s) for behavioural profiling (1130/1090);
e. module(s) for management of operators of physical spaces (1150, 1160).

24. Data processing system for calculating dynamic pricing in real-time according to claim 23 **characterized by** comprising a module of managing events, *triggers* (1030), interconnected with the user management modules (1150, 1020) and the physical spaces operator management modules (1150, 1160).

25. Data processing system real-time calculation of dynamic prices according to claim 23 comprising modules for the management and interface with an external online provider of scoring (1100, 1110).

26. Data processing system for real-time calculation of dynamic prices in accordance with Claim 23 **comprising** an interface between the modules that manage the physical spaces operators (1150, 1160) and ERP and / or POS systems of those operators.

27. Data processing system for real-time calculation of dynamic prices in real-time according to claim 23 **comprising** an interface between the modules that manage the operators of physical spaces (1150, 1160) and the behavioral profiling modules (1130/1090).

28. Data processing system for real-time calculation of dynamic prices according to any one of claims 23 to 27 **characterized by** being programmed to perform one of the methods of claims 1-19.
